# DEMANDE DE BREVET EUROPEEN

(11) **EP 4 580 126 A1**
(43) Date de publication de la demande: **02.07.2025**
(21) Numéro de dépôt: 24223318.7
(22) Date de dépôt: 26.12.2024
(51) Int. Cl.: H04L 9/40, H04W 12/00

(54) **PROCÉDÉ DE MAINTIEN D'UN CANAL SÉCURISÉ ENTRE UN CLIENT ET UN SERVEUR À TRAVERS UN RÉSEAU NON FILAIRE ; PRODUIT PROGRAMME D ORDINATEUR ASSOCIÉ**

(30) Priorité: 27.12.2023 FR 2315345
(71) Demandeur: THALES, 92190 Meudon (FR); THALES DIS FRANCE SAS, 92190 Meudon (FR)
(72) Inventeur: SCHOLLER, Franck, 92622 GENNEVILLIERS CEDEX (FR); DEMARTY, Joël, 92190 MEUDON (FR); ECH-CHERGUI, Ben Youcef, 49309 CHOLET (FR)
(74) Mandataire: Lavoix

(57) **Abrégé**

Procédé de maintien d'un canal sécurisé entre un client (10) et un serveur (40) à travers un réseau non filaire, le procédé comportant les étapes de, un secret étant partagé entre le client et le serveur : alors que le client est en mode « sommeil » et que des données doivent être transmises du client vers le serveur, réveil du client et lancement, par le client, d'une procédure de rétablissement du canal sécurisé en transmettant au serveur un message de changement d'état du type « réveil » protégé en utilisant ledit secret ; et alors que le client est en mode « sommeil » et que des données doivent être transmises du serveur vers le client, réveil du client par le serveur au moyen de l'émission d'un message de radiomessagerie et lancement par le client de la procédure de rétablissement du canal sécurisé en transmettant au serveur un message de changement d'état du type « réveil » protégé en utilisant ledit secret.

## Description

La présente invention concerne un procédé de maintien d'un canal sécurisé entre un client en mobilité et un serveur, à travers un réseau non filaire.

Un réseau privé virtuel - VPN (« Virtual Private Network ») est l'établissement d'un tunnel IP sécurisé, ou tunnel VPN, pour l'échange de données entre deux acteurs constituant les points de terminaison de ce canal sécurisé.

Un VPN peut être utilisé entre deux acteurs, dont l'un (dénommé client dans ce qui suit) est en mobilité. Il peut s'agir d'un téléphone portable connecté à un réseau cellulaire (4G ou autre) ou satellitaire, une tablette connectée à un réseau Wi-Fi, etc., ou, de manière générale, tout objet connecté via une liaison air à un réseau de radiocommunication.

L'utilisation en mobilité d'un VPN signifie que le contexte (c'est-à-dire les informations de configuration du tunnel VPN) des points de terminaison du tunnel VPN (celui de l'application client VPN exécutée par le client et celui de l'application serveur VPN exécuté par le serveur VPN) doivent être mis à jour en fonction de l'évolution de certains paramètres de fonctionnement du client au cours de son déplacement, notamment l'adresse IP du client qui peut être changée lorsque le client s'attache à une nouvelle station de base du réseau de radiocommunication. Il est à noter que l'adresse IP ne change pas nécessairement, et que cela dépend de la configuration du réseau opérateur et de la proximité des stations de base entre lesquelles passe l'équipement utilisateur.

Malgré ces changements de contexte, on souhaiterait ne pas pour autant perdre la session VPN en cours.

Il faudrait sinon réinitialiser le tunnel VPN à chaque modification de contexte. Il faudrait alors reprendre les procédures d'authentification (par identifiant et mot de passe) des sessions applicatives passant sur le canal VPN entre une application exécutée sur le client et un serveur de service.

Ceci n'est pas envisageable, par exemple lorsque le client est utilisé à bord d'un train et qu'il est susceptible de changer fréquemment d'adresse IP.

L'utilisation d'un VPN à travers les réseaux non filaire nécessite par conséquent l'implémentation de mécanismes de persistance de manière à assurer la continuité de services entre un client VPN et le serveur VPN - aussi dénommé passerelle VPN (« Gateway ») - établissant le réseau privé virtuel.

Ces mécanismes doivent garantir une continuité de service dans les deux sens, c'est-à-dire pour le trafic sortant et le trafic rentrant (par rapport au client), tout en gardant les fonctionnalités de mobilité (itinérance entre cellules d'un même réseau (« handover ») ou des cellules de réseaux différents (« roaming ») pour le cas de réseaux cellulaires).

Notamment, les mécanismes prévus par différentes recommandations « demandes de commentaires » - RFC (« Requests for comments ») de l'IETF (« Internet Engineering Task Force ») consistent à échanger un signal de vie (« heart beat ») entre l'application client VPN et l'application serveur VPN, afin de garantir et confirmer l'intégrité du canal virtuel - ou tunnel VPN - monté entre le client et le serveur VPN et permettre de répondre aux problématiques liées à la mobilité du client exécutant l'application client VPN embarquée.

La réception du signal de vie par un point de terminaison du tunnel VPN, par l'autre point de terminaison de ce même tunnel VPN permet de toujours garder le tunnel VPN « allumé » ou « ouvert ». Ainsi, l'échange de données de signalisation le long du tunnel VPN permet de garantir la continuité de service recherchée.

Notamment, alors que le client est placé dans le mode « sommeil », aussi dénommé mode « veille » - (« idle mode»), l'application client VPN garde toujours le tunnel VPN ouvert.

Mais cela implique le maintien d'une communication de données de signalisation sur l'interface air, même si aucune donnée applicative ne circule.

Le client génère donc un bruit constant sur le plan utilisateur. Il n'est pas silencieux, même quand il est en mode « sommeil » et ne transfert aucune donnée applicative.

De plus, cela impose un usage constant des moyens de communication du client et, par conséquent, une consommation énergétique importante, alors même que le client est en mode « sommeil ». Les batteries du client sont donc rapidement épuisées.

Le but de l'invention est ainsi de proposer un procédé de maintien d'un tunnel VPN en offrant des mécanismes sécurisés permettant d'assurer la continuité de service associée à l'utilisation d'un tunnel VPN en mobilité, sans avoir à échanger des messages de service pour maintenir le tunnel VPN « ouvert » alors que le client est en mode « sommeil ».

A cet effet, l'invention a pour objet un procédé de maintien d'un canal sécurisé entre un client et un serveur à travers un réseau non filaire, le procédé comportant les étapes de, un secret étant partagé entre le client et le serveur : alors que le client est en mode « sommeil » et que des données doivent être transmises du client vers le serveur, réveil du client et lancement, par le client, d'une procédure de rétablissement du canal sécurisé en transmettant au serveur un message de changement d'état du type « réveil » protégé en utilisant ledit secret ; et alors que le client est en mode « sommeil » et que des données doivent être transmises du serveur vers le client, réveil du client par le serveur au moyen de l'émission d'un message de radiomessagerie et lancement par le client de la procédure de rétablissement du canal sécurisé en transmettant au serveur un message de changement d'état du type « réveil » protégé en utilisant ledit secret.

Suivant d'autres aspects avantageux de l'invention, le procédé comprend une ou plusieurs des caractéristiques suivantes, prises isolément ou suivant toutes les combinaisons techniquement possibles :
- le procédé comporte, en outre, une étape d'échange du secret consistant, en mode « connecté » et alors que le canal sécurisé est établi, à calculer, en tant que secret, une clé de référence par un agent parmi le client et le serveur, et à transmettre, via le canal de sécurisé, la clé sécurisé vers l'autre agent.
- la clé de référence Kref est générée à partir d'un identifiant de la session en cours entre le client et le serveur le long du canal sécurisé.
- un algorithme du type AES 256 est exécuté pour calculer la clé de référence.
- le serveur tenant à jour un contexte serveur du canal sécurisé et le client tenant à jour un contexte client du canal sécurisé, la procédure de rétablissement du canal sécurisé consiste à : adapter, par le client, le contexte client avec une pluralité d'information modifiées comportant au moins une adresse IP courante du client ; transmettre, par le client au serveur, la pluralité d'informations modifiées dans le message de changement d'état du type « réveil » ; et, adapter, par le serveur, le contexte serveur associé à la clé de référence, en fonction de la pluralité d'informations reçues.
- le canal sécurisé est un canal VPN, le client exécutant une application client VPN et le serveur exécutant une application serveur VPN.
- un message de changement d'état du type « mise en veille » est transmis par le client vers le serveur, ledit message de mise en veille étant protégé par le secret partagé entre le client et le serveur.
- un message de changement d'état contient : l'identifiant du client, un compteur d'anti-rejeu, le type du message de changement d'état « mise en veille » ou « réveil », et tout ou partie du contexte client mise à jour pour une message de changement d'état du type « réveil ».
- alors que des contextes client et/ou serveur n'ont pas été sauvegardés avant un basculement du client dans le mode « sommeil », suite à la transmission au serveur d'un message de changement d'état du type « réveil », le client initie une négociation de clés pour établir le canal sécurisé.

L'invention concerne également un programme d'ordinateur comportant des instructions logicielles qui, lorsqu'elles sont exécutées par le calculateur d'un client ou d'un serveur en communication via un canal sécurisé à travers un réseau non filaire, mettent en oeuvre un procédé conforme au procédé précédent.

L'invention apparaîtra plus clairement à la lecture de la description qui va suivre, donnée uniquement à titre d'exemple non limitatif, et faite en référence aux dessins dans lesquels :
La figure 1 est une représentation schématique d'une infrastructure avec utilisation d'un VPN ; et,
La figure 2 est une représentation schématique du procédé selon l'invention.

De manière générale, le mécanisme de réveil du tunnel VPN du procédé selon l'invention, est fondé sur le partage, entre l'application client VPN et l'application serveur VPN, d'une clé de référence, échangée alors que le canal VPN est « ouvert ». Cette clé de référence permet de pouvoir valider une future requête d'échange de données entre les deux acteurs via le canal VPN, alors que ce dernier est « fermé ».

Un canal VPN est dit « ouvert » lorsque chaque correspondant dispose des clés VPN et des paramètres de contexte de ce canal VPN. Dès lors, la fermeture d'un canal VPN revient à ne plus pouvoir déchiffrer les flux transmis dans ce canal VPN, c'est à dire ne plus disposer soit des clés VPN, soit des information de contexte (ou bien les deux).

Pour rétablir la communication, l'invention permet de basculer de l'état « fermé » à l'état « ouvert » en sécurité, notamment en validant qu'il n'y a pas une attaque du type de l'homme du milieu (« man in the middle attack ») capable d'utiliser des informations de contexte capturées pour rétablir le canal.

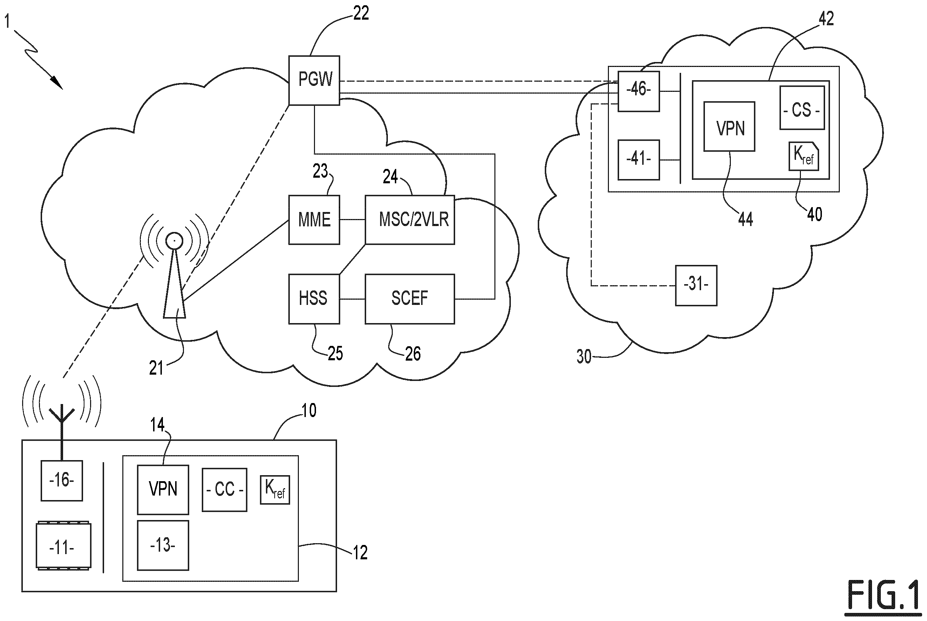

En référence à la figure 1, un mode de réalisation d'une infrastructure informatique pour la mise en oeuvre du procédé selon l'invention va être présenté.

L'infrastructure 1 comporte un client 10, comme un téléphone mobile.

Le client 10 est ordinateur comportant des moyens de calcul, tels qu'un processeur 11, et des moyens de mémorisation 12, tels qu'une mémoire. La mémoire stocke notamment les instructions de programmes d'ordinateurs, en particulier un programme dont l'exécution permet la mise en oeuvre d'une application de service et un programme dont l'exécution permet la mise en oeuvre d'une application client VPN 14.

La mémoire 12 stocke également une clé de référence Kref et un contexte client CC.

Le client 10 comporte un module de radiocommunication 16.

L'infrastructure 1 comporte un réseau de radiocommunication 20.

Le réseau 20 comporte des station de base, comme la station 21.

Le réseau 20 comporte une passerelle- PGW (« Packet Data Network Gateway ») 22 de connexion à un réseau public 30.

Par exemple, pour une implémentation conforme à la quatrième génération - 4G, le réseau 20 comporte, de manière connue, une entité de gestion de la mobilité - MME (« Mobility Management Entity ») 23, un centre de commutation mobile / enregistreur de localisation des visiteurs - MSC/VLR (« Mobile Switching Center / Visitor Location Register » ) 24, un serveur de souscription - HSS (« Home Subscriber Server ») 25 et une fonction d'exposition de capacité de service - SCEF (« Service Capability Exposure Function ») 26.

Le réseau public 30 comporte un serveur de service 31.

Le réseau public 30 comporte uns serveur VPN 40.

Le serveur VPN 40 est ordinateur comportant des moyens de calcul, tels qu'un processeur 41, et des moyens de mémorisation 42, tels qu'une mémoire. La mémoire stocke notamment les instructions de programmes d'ordinateurs, en particulier un programme dont l'exécution permet la mise en oeuvre d'une application client VPN 44.

La mémoire 42 stocke également une clé de référence Kref et un contexte serveur CS.

Le serveur VPN 40 comporte une interface d'entrée / sortie 46.

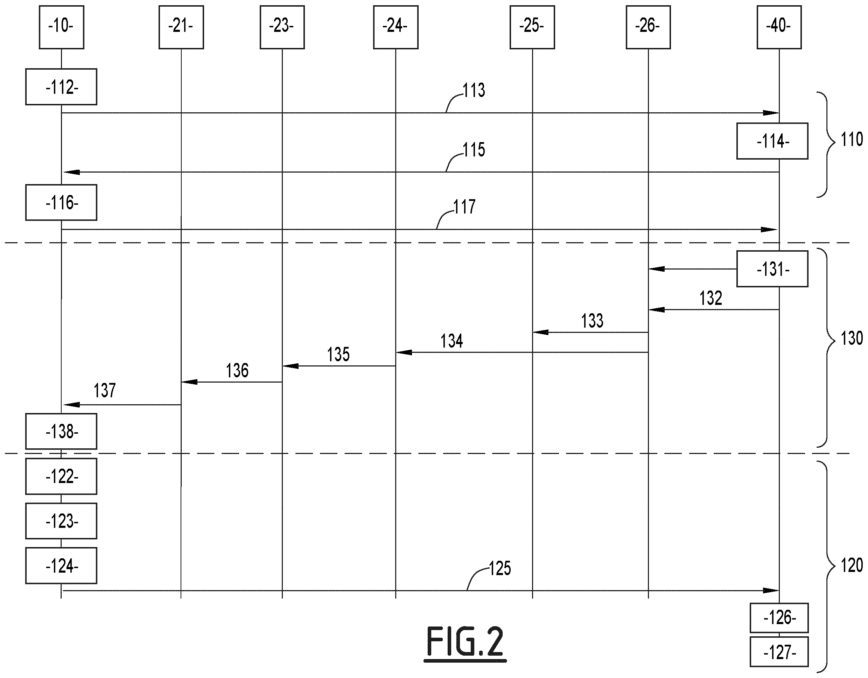

En référence à la figure 2, un mode de réalisation préféré du procédé selon l'invention va être présenté.

Le procédé 100 comporte une phase de génération de clé de référence 110, une phase de réveil sur demande du client VPN 120 et une phase de réveil sur demande du serveur VPN 130.

### Phase 110 de génération d'une clé de référence

En mode « connecté » du client 10, un tunnel VPN est établi entre les deux points d'extrémité que sont l'application client VPN 14, exécutée sur le client mobile, et l'application serveur VPN 44 exécutée sur le serveur VPN 40.

Cela permet à l'application 13 d'accéder, via le tunnel VPN et le serveur VPN 40, au serveur de service 31.

L'application client VPN 14 mémorise un ensemble d'attributs du tunnel VPN, rassemblés dans le contexte client CC.

L'application serveur VPN 44 mémorise également un ensemble d'attributs du tunnel VPN, rassemblés dans un contexte serveur CS.

Au cours d'une session VPN de communication, des messages de données sont échangés entre l'application client VPN 14 et l'application serveur VPN 44, le long du tunnel VPN.

Chaque message contient un identifiant de session VPN. Cet identifiant est incrémenté à chaque message échangé. Cette incrémentation est cohérente entre l'application serveur VPN et l'application client VPN.

Cet identifiant de session VPN fait partie des contextes client et serveur.

Soit un secret est déjà partagé entre le terminal mobile 10 et le serveur VPN 40 (comme une clé publique certifiée) et l'étape 110 se résume à l'étape 117, soit aucun secret n'est encore partagé entre le terminal mobile 10 et le serveur VNP 40 et l'étape 110 comporte les étape 112 à 116 de partage d'une clé de référence en tant que secret.

Ainsi, dans ce dernier cas, avant que le client 10 ne bascule dans le mode « sommeil », l'application client VPN 14 génère (étape 112) une clé de chiffrement de référence, Kref.

Par exemple, un algorithme du type AES 256 (« Advanced Encryption Standard » ou standard de cryptage avancé) est exécuté par le client VPN.

Avantageusement, la clé de référence Kref est dérivée de la valeur courante de l'identifiant de session VPN, c'est-à-dire l'identifiant de la dernière session VPN qui a eu une réponse positive de l'application serveur VPN.

L'application client VPN 14 transmet (étape 113), via le canal VPN, un message d'information à l'application serveur VPN 44, ce message d'information comportant la clef de référence Kref générée à l'étape 112.

Lors de la réception du message d'information, l'application serveur VPN mémorise (étape 114) la clé de référence, Kref, en association avec le contexte serveur courant du tunnel VPN.

Le serveur VPN confirme la bonne réception de la clef de référence en transmettant (étape 115) un message d'accusé-réception vers l'application client VPN.

Sur réception du message de contrôle, l'application client VPN 14 mémorise (étape 116) la clé de référence Kref en association avec le contexte client courant du tunnel VPN.

En variante, c'est l'application serveur VPN qui génère la clé de référence et qui la transmet à l'application client VPN à travers le tunnel VPN. Cette dernière envoie en retour un message d'accusé-réception de la clé de référence.

Puis, dans l'étape 117, un message de mise en veille est transmis par le terminal mobile 10 vers le serveur VPN 40. Ce message de changement d'état est protégé, par chiffrement, avec le secret partagé entre les deux acteurs, comme la clé de référence Kref.

Ce message de changement d'état du terminal mobile contient : l'identifiant du terminal mobile, un compteur d'anti-rejeu permettant de contrer les attaques de rejeu, l'information « mise en veille » ou « réveil », et, optionnellement, les informations de contexte du VPN si elles ont changées pendant la phase de sommeil du terminal mobile (notamment l'adresse IP du terminal mobile).

Le client 10 bascule ensuite en mode « sommeil » et le tunnel VPN est « fermé » temporairement.

Aucune donnée n'est alors plus échangée entre l'application client VPN et l'application serveur VPN.

Le procédé 100 présente la capacité de reprise, à la demande de l'un ou de l'autre des deux acteurs.

Pour cela, l'application client VPN 14 et l'application serveur VPN 44 doivent constamment être ouverts, en attente de la réception d'un message de déclenchement du réveil, en provenance de l'autre acteur.

### Phase de réveil 120 déclenchée par l'application client VPN

Dans le cas où des données doivent être transmises depuis le client, ce dernier bascule (étape 122) du mode « sommeil » au mode « connecté » et demande à l'application client VPN 14 de rétablir le tunnel VPN.

L'application client VPN 14 doit alors reconstruire le tunnel VPN en gardant une continuité de service.

Pour cela, il est possible de mettre en oeuvre un mécanisme dérivé du mécanisme dit d'« Auto Reconnect », tels que définis dans la norme RFC 5723.

Dans une étape 123, l'application client VPN 14 extrait de sa mémoire la clé de référence Kref et le contexte client CS associé, correspondant au contexte client avant l'interruption.

Dans une étape 124, l'application client VPN met à jour le contexte client CS avec les informations ayant changées pendant la phase de sommeil, notamment l'adresse IP du terminal.

Dans une étape 125, un message de réveil est émis par le terminal 10 vers le serveur VPN 40. Ce message de changement d'état est protégé, par chiffrement, avec le secret partagé entre les deux acteurs, comme la clé de référence Kref.

La partie optionnelle de ce message de changement d'état comporte les informations de contexte VPN ayant changées pendant la phase de sommeil du terminal mobile (notamment l'adresse IP du terminal mobile).

Lors de la réception du message de rétablissement du tunnel VPN, l'application serveur VPN 44 décrypte (étape 126) le message de changement d'état en utilisant le secret partagé et extrait les informations opérationnelles. Cette vérification cryptographique du message permet de valider son intégrité et son authenticité.

Avantageusement, l'application VPN 44 vérifie également la validité du compteur anti-rejeu, pour détecter si le message de réveil n'est pas un rejeu.

Si ces vérifications conduisent à des erreurs, le message est supprimé.

Sinon, dans une étape 127, l'application serveur VPN 44 transmet éventuellement une confirmation de la réception du message, mais surtout met à jour le contexte serveur CS avec les informations reçues dans le message de changement d'état.

L'application serveur VPN 44 rétablit ainsi le tunnel VPN précédemment mis en place avant la mise en veille, sans nécessiter de négociation entre les acteurs (notamment de nouvelles clés de chiffrement VPN).

D'où une mise en service plus rapide du tunnel VPN au réveil.

Ainsi, les deux acteurs ont des contextes mises à jour leur permettant de reprendre la session de communication VPN là où elle s'était arrêtée. Des messages sécurisés peuvent alors être transmis.

Dans certains cas d'usage, la possibilité de passer un terminal en mode « veille» pour qu'il soit silencieux est plus importante que de garder le contexte VPN. Dans ce cas, le terminal mobile passe en mode « veille», supprime son contexte VPN (le serveur le supprime aussi de son côté) et, au moment où un réveil est demandé (soit par le terminal, soit par le serveur), le terminal initie une nouvelle négociation de clés VPN pour établir un nouveau contexte VPN.

Ce qui est gardé en mémoire par le serveur et le terminal lors d'une phase de veille est le secret de protection (notamment la clé de référence) des messages de mise en veille/réveil et, avantageusement, le compteur anti-rejeu, qui est unique entre chaque couple terminal mobile / serveur VPN.

### Phase de réveil 130 déclenchée par l'application serveur VPN

Dans le cas où des données doivent être transmises du serveur vers le client, le client doit pouvoir être informé qu'il doit basculer du mode « sommeil » vers le mode « connecté » et demander à l'application client VPN de lancer la procédure de rétablissement du tunnel VPN (phase 120).

Pour cela, est mis en oeuvre un mécanisme de radiomessagerie (« paging ») pour la transmission d'un message de réveil de l'application serveur VPN vers le client.

Le message de réveil comporte tout ou partie des informations de contexte CS du serveur.

Dans l'étape 138, une fois réveillé, le terminal met à jour son contexte CS. S'il y a une divergence entre le contexte CC mis à jour du terminal et les informations de contexte CS communiquées par le serveur, le terminal 10 initie la procédure de la phase 120 pour que l'application client VPN et l'application serveur VPN reconstruisent le tunnel VPN en mettant à jour les contextes avant l'interruption avec les informations d'itinérance du client, et ainsi assurer la continuité de la communication VPN en poursuivant la session VPN.

Dès lors, le contexte VPN est de nouveau actif et opérationnel.

Dans le cas où le contexte n'a pas été mémorisé avant la mise en sommeil, le message de réveil ne contient pas d'informations relatives au contexte côté serveur VPN. Alors la phase 120 comporte une négociation de clés VPN pour établir un nouveau contexte VPN.

Dans un mode de réalisation préféré, le mécanisme de radiomessagerie pour la transmission d'un message de réveil du serveur vers le client dérive de la procédure, présentée dans la recommandation technique TS 29 337 V11.7.0 (2016-01) de l'ETSI, permettant à un objet connecté - loT (« Internet of Things ») de répondre à une sollicitation d'un portail client (SCS).

Ainsi, pour que l'application serveur VPN 44 puisse utiliser la fonctionnalité de radiomessagerie, il faut d'abord qu'il soit enregistré (étape 131) auprès de l'entité SCEF (ou MTC-IWF) 26, pour obtenir le droit d'émettre des messages de réveil par radiomessagerie.

L'enregistrement a pour but de créer un identifiant de transaction et les droits de requêtes formant ainsi une entrée dans la table de contexte de l'entité SCEF, à laquelle se rajoute l'identifiant du client à réveiller.

Le client peut être identifié à partir de son numéro MSISDN, d'un identifiant externe sauvegardé sur un serveur d'authentification MTC AAA de l'opérateur ou d'un identifiant de groupe.

Pour réveiller le client, l'application VPN 44 contacte (étape 132) d'abord l'entité SCEF 26 via une requête DIAMETER. La requête DIAMETER comporte l'identité publique du client et la clé de référence Kref.

Lorsque l'entité SCEF reçoit une demande de réveil, il contacte (étape 133) d'abord la base de données HSS (ou le HLR) 25 afin de convertir l'identité publique du client en une identité interne au réseau opérateur (identifiant IMSI).

L'entité HSS/HLR 25 peut éventuellement contacter un serveur d'authentification pour convertir une identité externe en un numéro IMSI.

Si l'identité du client est reconnue, l'entité SCEF récupère les informations de souscription du client afin de mettre en relation l'application VPN avec le client.

L'entité SCEF 26 définit la méthode de réveil la plus adéquate sur le plan de contrôle pour déclencher une action du client, à partir des informations suivantes :
- Les informations actuelles d'accessibilités du client (sur quel réseau le client est situé, et sur quelle zone) ;
- Les méthodes de déclenchement de service supporté par le réseau HPLMN ou VPLMN ;
- Les méthodes de déclenchement supportées par le client ;
- Les politiques de déclenchement de réveil de l'opérateur ;
- Autres informations reçues de la part de l'application serveur VPN dont potentiellement la localisation du client si celle-ci est connue. La localisation permet d'optimiser le paging à la cellule et non à la zone de localisation - TAI (« Tracking Area Identifier ») qui regroupe un grand nombre de cellules.

Les méthodes de réveil possible sont :
- MT SMS : le client doit pouvoir reconnaître dans le message de réveil, un MT SMS provenant l'application serveur VPN ;
- Cell Broadcast : La procédure Cell Broadcast permet de réveiller le client en émettant des informations sur les SIB portés par le canal balise ;
- Signalisation NAS ;
- Messages IMS.

Puis le SCEF 26 émet (étape 134) un message de réveil vers le MSC 24, qui le réémet (étape 135) à son tour vers le MME 23, qui le réémet (étape 136) à son tour vers la station de base 21, qui le diffuse (étape 137) dans la cellule où se trouve le client.

Le client 10 écoutant son environnement radio, il capte le message de réveil. Il compare (étape 138) la clé de référence indiquée dans ce message de réveil, avec la clé de référence Kref qu'il mémorise.

En cas de corrélation, le client10 bascule (étape 122) du mode « sommeil » dans le mode « connecté » et lance la procédure de rétablissement du tunnel VPN. Les étapes 121 à 127 sont réalisées pour rouvrir le tunnel VPN.

### Avantages

Avec ce mécanisme automatisé de reconstruction du tunnel VPN entre un client mobile et un serveur VPN, le procédé selon l'invention garantit une continuité de service après une période de silence. Il permet de rétablir l'ensemble des moyens sécuritaires instantanément sans perte de service ou nécessité de rétablir une authentification (coûteuse en temps et opérations).

Il est à noter que le message de réveil diffusé (« broadcated ») sur une cellule est intercepté par tous les terminaux sur cette cellule. Avec le mécanisme selon l'invention, le seul terminal effectivement réveillé est celui qui est capable de valider l'ensemble des clefs présentes dans le message. Il n'y a donc pas de réveil abusif des terminaux, mais réveil du seul terminal concerné.

Le procédé selon l'invention offre un mécanisme permettant à un client de rester silencieux quand celui-ci n'émet ou ne reçoit aucune donnée applicative, puisqu'aucun canal de communication persistant n'est maintenu quand il n'y a pas communication de données applicatives. En particulier, il permet d'éviter l'échange d'un signal de vie.

Il offre à la fois un mécanisme d'établissement d'un tunnel VPN et un mécanisme de mise en sommeil du client mobile qui ne signale pas l'existence de ce tunnel VPN.

Cela permet d'accroitre la sécurité du tunnel VPN entre le client et le serveur VPN.

## Revendications

1. Procédé (100) de maintien d'un canal sécurisé entre un client (10) et un serveur (40) à travers un réseau non filaire, le procédé comportant les étapes de, un secret étant partagé entre le client et le serveur :
- alors que le client est en mode « sommeil » et que des données doivent être transmises du client (10) vers le serveur (40), réveil du client et lancement (120), par le client, d'une procédure de rétablissement du canal sécurisé en transmettant au serveur un message de changement d'état du type « réveil » protégé en utilisant ledit secret ; et,
- alors que le client est en mode « sommeil » et que des données doivent être transmises du serveur vers le client, réveil (130) du client par le serveur au moyen de l'émission d'un message de radiomessagerie et lancement (120) par le client de la procédure de rétablissement du canal sécurisé en transmettant au serveur un message de changement d'état du type « réveil » protégé en utilisant ledit secret.

2. Procédé selon la revendication 1, comportant, en outre, une étape (110) d'échange du secret consistant, en mode « connecté » et alors que le canal sécurisé est établi, à calculer, en tant que secret, une clé de référence par un agent parmi le client (10) et le serveur (40), et à transmettre, via le canal de sécurisé, la clé sécurisé vers l'autre agent.

3. Procédé selon la revendication 2, dans lequel la clé de référence (Kref) est générée à partir d'un identifiant de la session en cours entre le client et le serveur le long du canal sécurisé.

4. Procédé selon la revendication 2 ou la revendication 3, dans lequel un algorithme du type AES 256 est exécuté pour calculer la clé de référence.

5. Procédé selon l'une quelconque des revendications précédentes, dans lequel le serveur (40) tenant à jour un contexte serveur (CS) du canal sécurisé et le client tenant à jour un contexte client (CC) du canal sécurisé, la procédure de rétablissement du canal sécurisé consiste à :
- adapter (124), par le client (10), le contexte client (CS) avec une pluralité d'information modifiées comportant au moins une adresse IP courante du client ;
- transmettre (125), par le client (10) au serveur (40), la pluralité d'informations modifiées dans le message de changement d'état du type « réveil » ; et,
- adapter (127), par le serveur, le contexte serveur (CS) associé à la clé de référence, en fonction de la pluralité d'informations reçues.

6. Procédé selon l'une quelconque des revendications précédentes, dans lequel le canal sécurisé est un canal VPN, le client (10) exécutant une application client VPN (14) et le serveur (40) exécutant une application serveur VPN (44).

7. Procédé selon l'une quelconque des revendications précédentes, dans lequel un message de changement d'état du type « mise en veille » est transmis par le client (10) vers le serveur (40), ledit message de mise en veille étant protégé par le secret partagé entre le client et le serveur.

8. Procédé selon l'une quelconque des revendications précédentes, dans lequel, le message de changement d'état contient : l'identifiant du client, un compteur d'anti-rejeu, le type du message de changement d'état « mise en veille » ou « réveil », et tout ou partie du contexte client mis à jour pour un message de changement d'état du type « réveil ».

9. Procédé selon l'une quelconque des revendications précédentes, dans lequel, alors que des contextes client et/ou serveur n'ont pas été sauvegardés avant un basculement du client dans le mode « sommeil », suite à la transmission au serveur du message de changement d'état du type « réveil », le client initie une négociation de clés pour établir le canal sécurisé.

10. Programme d'ordinateur comportant des instructions logicielles qui, lorsqu'elles sont exécutées par le calculateur d'un client (10) ou d'un serveur (20) en communication via un canal sécurisé à travers un réseau non filaire, mettent en oeuvre un procédé (100) selon l'une quelconque des revendications précédentes.
